# EUROPÄISCHE PATENTANMELDUNG

(11) **EP 4 736 708 A1**
(43) Veröffentlichungstag der Anmeldung: **06.05.2026**
(21) Anmeldenummer: 25212372.4
(22) Anmeldetag: 30.10.2025
(51) Int. Cl.: A45F 5/00, A47G 29/08, H04M 1/11

(54) **BRILLENABLAGEEINRICHTUNG**

(30) Priorität: 30.10.2024 DE 102024131769
(71) Anmelder: MW-CNC-Performance UG (haftungsbeschränkt), 51645 Gummersbach (DE)
(72) Erfinder: Marcel, Wintersohl, 51645 Gummersbach (DE)
(74) Vertreter: Rebbereh, Cornelia

(57) **Zusammenfassung**

Bei einer Brillenablageeinrichtung (1) zum Aufnehmen zumindest einer Brille (4) mit zumindest einem Nasenbügel (40), wobei die Brillenablageeinrichtung (1) zumindest einen Aufnahmeabschnitt und zumindest eine Aufstandsfläche (100) zum Aufstellen der Brillenablageeinrichtung (1) aufweist, weist die Brillenablageeinrichtung (1) zum Aufnehmen und Halten der Brille (4) zumindest einen den Nasenbügel (40) der Brille (4) abstützenden Nasenbügelaufnahme- und -abstützabschnitt (10), zumindest zwei Brillengläseraufnahmeabschnitte (11, 12) und zumindest zwei Brillenbügelaufnahmeabschnitte (13, 14) auf, wobei der zumindest eine Nasenbügelaufnahme- und -abstützabschnitt (10) zwischen den zumindest zwei Brillengläseraufnahmeabschnitten (11, 12) angeordnet und diesen gegenüber erhöht ausgebildet ist.

## Beschreibung

Die Erfindung betrifft eine Brillenablageeinrichtung zum Aufnehmen und/oder Halten zumindest einer Brille mit zumindest einem Nasenbügel, wobei die Brillenablageeinrichtung zumindest einen Aufnahmeabschnitt und zumindest eine Aufstandsfläche zum Aufstellen der Brillenablageeinrichtung aufweist.

Brillenablageeinrichtungen sind in unterschiedlichsten Ausgestaltungen im Stand der Technik bekannt. Diese dienen zum Ablegen einer Brille und sind oftmals eingebaut in einem Kraftfahrzeug, insbesondere als Wandhalterung ausgebildet, wie beispielsweise in der DE 103 39 289 A1 offenbart. Bei diesem Brillenfach ist es vorgesehen, dass die Brille stehend gelagert wird, wobei auch dieses Brillenfach in einem Fahrzeug angeordnet wird.

Aus der DE 20 2020 002 924 U1 ist eine Brillenablage zur Wandmontage bekannt, wobei diese im Innern einteilig ausgefräst ist. Die Ausfräsung dient als Ablagemöglichkeit für Brillen, wobei die Ausfräsung rund, also ohne Ecken, gefertigt ist, damit sich kein Staub in Ecken festsetzen kann.

Ferner ist aus der DE 295 04 017 U1 eine Brillenablage bekannt, die eine Schale zur Brillenablage und eine in der Schale drehbar gelagerte Konsole aufweist, die mit der Schale als Aufsteller oder als Aufhänger der Brillenablage zusammenwirkt. Das Drehlager der Konsole im Innern der Schale dient als Anschlag für die Brillengläserfassungen unter dem Nasenbügel der Brille.

Aus der DE 201 13 841 U1 und der DE 101 41 013 A1 ist ein universeller Brillenablagehalter bekannt, der aus dem Brillenablagehalter mit integrierten Brillenauflageschenkeln und integrierter Wandbefestigungsleiste besteht. Zwischen den Brillenauflageschenkeln ist ein Fingergreiffreiraum angeordnet, so dass die Brille am Nasenbügel zum Ablegen und zur Aufnahme gegriffen werden kann. Der Brillenablagehalter ist zur Wandbefestigung vorgesehen und wird über sogenannte Powerstrips an der Wand befestigt.

Die US 2002 / 0 007 578 A1 offenbart einen Brillenhalter und einen Schreibtischorganisator. Dieser weist einen Drahtrahmen auf, der einen Bereich zum Halten von Brillen, hohle Rohre zur Aufnahme von Stiften, eine Aufbewahrungsschale und einen Rahmen zum Halten von Bildern bietet. Der Brillenhalter und Schreibtischorganisator bietet einen Haken und einen Rahmen, an dem Brillen aufgehängt werden können, sowie durchsichtige Kunststoffabschnitte, die innerhalb des Drahtrahmens gehalten werden, um Bilder aufzustellen. Ferner gibt es einen Schlitz, der an einer Basis befestigt ist, wobei der Schlitz dazu bestimmt ist, eine Reihe von Visitenkarten aufzunehmen und zu halten.

Aus der CH 685 844 A5 ist eine Vorrichtung zum Aufbewahren von Brillen, insbesondere zum Einbau in Kraftfahrzeugen, bekannt, die ein Schutzgehäuse und eine mit diesem beweglich verbundene Halterung zur Aufnahme einer Brille aufweist, wobei die Halterung zwischen einer inneren Raststellung, in welcher die Brille im Wesentlichen im Schutzgehäuse eingeschlossen ist und einer äußeren Raststellung, in welcher die Brille aus der Halterung entnommen oder in diese eingelegt werden kann, bewegbar ist und wobei die Halterung so ausgebildet ist, dass in ihrer äußeren Raststellung eine eingelegte Brille so festgehalten ist, dass ihre Bügel ein- oder ausklappbar sind.

Bei den vorstehend genannten Lösungen des Standes der Technik erweist es sich als nachteilig, dass entweder eine Brille nur im zusammengeklappten Zustand in einer Brillenablageeinrichtung aufgenommen werden kann oder dass, wie bei der DE 201 13 841 U1 und DE 101 41 013 A1, die nicht zusammengelegte Brille seitlich verrutschen und von der Brillenablageeinrichtung herunterfallen kann bzw. ferner die Brillenablageeinrichtungen des Standes der Technik nicht zum Aufstellen auf einer Ebene, wie einem Tisch oder einem Schrank, geeignet ausgebildet sind, da sie keine Aufstandsfläche aufweisen, wie bei der Aufbewahrungsvorrichtung nach CH 685 844 A5. An der Vorrichtung nach der US 2002 / 0 007 578 A1 ist kein sicherer Halt und keine sichere Aufnahme für eine Brille möglich.

Der vorliegenden Erfindung liegt daher die Aufgabe zugrunde, eine Brillenablageeinrichtung zum Aufnehmen zumindest einer Brille mit zumindest einem Nasenbügel, wobei die Brillenablageeinrichtung zumindest einen Aufnahmeabschnitt und zumindest eine Aufstandsfläche zum Aufstellen auf einer Ebene, wie einem Tisch oder Schrank, aufweist, vorzusehen, auf der ein sicheres, insbesondere verrutschsicheres, Halten einer nicht zusammengeklappten Brille möglich ist.

Die Aufgabe wird für eine Brillenablageeinrichtung nach dem Oberbegriff des Anspruchs 1 dadurch gelöst, dass die Brillenablageeinrichtung zum Aufnehmen und Halten einer Brille zumindest einen den Nasenbügel einer Brille abstützenden Nasenbügelaufnahme- und -abstützabschnitt, zumindest zwei Brillengläseraufnahmeabschnitte und zumindest zwei Brillenbügelaufnahmeabschnitte aufweist, wobei der zumindest eine Nasenbügelaufnahme- und -abstützabschnitt zwischen den zumindest zwei Brillengläseraufnahmeabschnitten angeordnet und diesen gegenüber erhöht ausgebildet ist und/oder die zumindest zwei Brillengläseraufnahmeabschnitte gegenüber dem zumindest einen Nasenbügelaufnahme- und -abstützabschnitt vertieft ausgebildet sind. Weiterbildungen der Erfindung sind in den abhängigen Ansprüchen definiert.

Dadurch wird eine Brillenablageeinrichtung zum Aufnehmen und verrutschsicheren Halten zumindest einer Brille, die zumindest einen Nasenbügel aufweist, geschaffen, wobei der Nasenbügel der Brille auf dem zumindest einen Nasenbügelaufnahme- und -abstützabschnitt aufgelagert und abgestützt wird und die Brillengläser der Brille auf insbesondere zwei beidseitig benachbart zum Nasenbügelaufnahme- und -abstützabschnitt angeordneten Brillengläseraufnahmeabschnitten und die Brillenbügel auf den zumindest zwei Brillenbügelaufnahmeabschnitten positioniert bzw. angeordnet werden. Die Brille wird mit ihrem Nasenbügel so auf dem Nasenbügelaufnahme- und -abstützabschnitt angeordnet, dass die in Tragerichtung der Brille nach oben weisende Seite, also die weg von Nasenpads der Brille weisende Seite des Nasenbügels auf dem Nasenbügelaufnahme- und -abstützabschnitt aufliegt, dementsprechend auch die obere Seite der Brillengläser bzw. einer Brillenumrandung, die die Brillengläser zumindest teilweise umgibt, auf den zumindest zwei Brillengläseraufnahmeabschnitten aufliegt. Unter einem Brillenglas wird hier jeweils ein mit einer Brillenumrandung versehenes Brillenglas und ein ohne eine solche versehenes Brillenglas einer randlosen Brille verstanden. Unter einem Brillengläseraufnahmeabschnitt wird insofern der Abschnitt verstanden, der bei randlosen Brillen die Brillengläser bzw. bei zumindest teilweise umrandeten Brillen die Brillengläser und deren zumindest teilweise diese umgebende Brillenumrandung aufnimmt.

Entweder kann der Nasenbügelaufnahme- und -abstützabschnitt gegenüber den Brillengläseraufnahmeabschnitten erhöht oder die Brillengläseraufnahmeabschnitte gegenüber dem Nasenbügelaufnahme- und - abstützabschnitt vertieft ausgebildet sein. Bei einem vertieften Ausbilden der Brillengläseraufnahmeabschnitte gegenüber dem Nasenbügelaufnahme- und -abstützabschnitt können die Brillengläseraufnahmeabschnitte gegenüber einer Ebene, in der der Nasenbügelaufnahme- und -abstützabschnitt angeordnet ist, vertieft ausgebildet sein, während bei einem erhöhten Ausbilden des Nasenbügelaufnahme- und -abstützabschnitts gegenüber den Brillengläseraufnahmeabschnitten der Nasenbügelaufnahme- und -abstützabschnitt gegenüber der zumindest einen Ebene, in der die Brillengläseraufnahmeabschnitte angeordnet sind, erhöht ausgebildet ist, aus dieser also herausragt.

Bei einem vertieften Ausbilden der zumindest zwei Brillengläseraufnahmeabschnitte gegenüber dem zumindest einen Nasenbügelaufnahme- und -abstützabschnitt können die zumindest zwei Brillengläseraufnahmeabschnitte insbesondere muldenartig und/oder trichterförmig und/oder nutartig ausgebildet sein. Eine solche Trichterform läuft konisch in Richtung auf einen tiefsten Bereich oder Punkt der Mulde oder Nut zu. Insbesondere können die Brillengläseraufnahmeabschnitte jeweils als facettierte trichterförmige Mulde zum geführten Abstützen eines jeweiligen Brillenglases bzw. einer jeweiligen Brillenumrandung von diesem ausgebildet sein. Durch die Facettenflächen einer solchen facettierten trichterförmigen Mulde können die Brillengläser bzw. deren Brillenumrandung in eine gewünschte Position in den Brillengläseraufnahmeabschnitten geführt werden. Ferner ist durch die Facettenflächen der facettierten trichterförmigen Mulde eine seitliche Abstützung der Brillengläser bzw. Brillenumrandungen möglich. Zudem können unterschiedlich dimensionierte Brillengläser bzw. Brillenumrandungen in unterschiedlichen Höhen bzw. Tiefen in einer solchen facettierten trichterförmigen Mulde stets geeignet seitlich abgestützt werden, da die Facettenflächen schräg zulaufen und somit ein Auflagern von Brillengläsern bzw. deren Brillenumrandungen in geeigneter Höhe bzw. Tiefe in der jeweiligen Mulde oder Nut ermöglichen.

Die Überhöhung des Nasenbügelaufnahme- und -abstützabschnitts gegenüber den beiden benachbarten Brillenbügelaufnahmeabschnitten bzw. die Vertiefung der Brillenbügelaufnahmeabschnitte gegenüber dem des Nasenbügelaufnahme- und -abstützabschnitt ist vorteilhaft im Bereich von wenigen Millimetern, insbesondere 2 bis 5 mm, insbesondere 4 mm, dimensioniert. Diese Überhöhung bzw. Vertiefung oder Höhe gegenüber den Brillengläseraufnahmeabschnitten ist ausreichend, um den zumindest einen Nasenbügel einer Brille geeignet abzustützen und im Wesentlichen verrutschsicher zu halten, wenn der Nasenbügel dort aufliegt. Die zumindest eine Brille stützt sich somit mit ihrem Nasenbügel auf dem Nasenbügelaufnahme- und -abstützabschnitt auf, während die beiden zum Nasenbügel benachbart angeordneten Brillenumrandungen bzw. Brillengläser auf den beiden Brillengläseraufnahmeabschnitten aufliegen. Die beiden Brillenbügel der Brille liegen auf den beiden Brillenbügelaufnahmeabschnitten auf, wobei zwischen den Brillenbügelaufnahmeabschnitten zumindest ein diesen gegenüber überhöhter Abschnitt angeordnet ist. Dieser zumindest eine überhöhte Abschnitt kann podestartig ausgebildet sein. Auf diesem können weitere Gegenstände abgelegt werden. Der überhöhte Abschnitt der Brillenablageeinrichtung ermöglicht es, dass die Brille nicht von der Brillenablageeinrichtung herunterrutscht, da deren Brillenbügel den überhöhten Abschnitt zwischen sich aufnehmen.

Die Brillenablageeinrichtung kann weiter vorteilhaft zumindest einen Abschnitt zur Aufnahme zumindest eines Mobiltelefons aufweisen. Hierdurch ist es möglich, zusätzlich zu der Brille auch ein Mobiltelefon sicher auf der Brillenablageeinrichtung abzulegen bzw. aufzustellen. Der Abschnitt zur Aufnahme des zumindest einen Mobiltelefons kann entsprechend beispielsweise in Form einer Langöffnung bzw. Langnut insbesondere ein senkrechtes oder in einem Winkel zur Senkrechten angeordnetes Einfügen eines Mobiltelefons dort ermöglichen. Der zumindest eine Abschnitt zur Aufnahme des zumindest einen Mobiltelefons kann mit zumindest einer Ladeeinrichtung zum induktiven Laden des Mobiltelefons, das auf dem oder in dem Abschnitt zur Aufnahme des Mobiltelefons angeordnet ist, versehen sein oder werden. Hierdurch kann das Mobiltelefon dort auch geladen, also nicht nur dort abgelegt werden. Beispielsweise kann somit nicht nur die Brille einer Person, sondern auch deren Mobiltelefon auf der Brillenablageeinrichtung sicher aufgelegt bzw. aufgestellt und gehalten sowie das Mobiltelefon während dieser Ablagezeit auch geladen werden. Die Brillenablageeinrichtung kann vorteilhaft mit zumindest einem Anschluss zum Anschließen eines Netzteils bzw. einer Leitung zum Verbinden mit einer Strom- bzw. Spannungsquelle versehen sein oder werden.

Ferner kann die Brillenablageeinrichtung mit zumindest einer Öffnung, Nut oder Bohrung zur Aufnahme zumindest eines Schreibgeräts, wie eines Stifts, versehen sein. Beispielsweise können benachbart zu dem zumindest einen Abschnitt zur Aufnahme zumindest eines Mobiltelefons zwei solcher Öffnungen, Bohrungen oder Nuten zur Aufnahme jeweils zumindest eines Schreibgeräts vorgesehen sein. Durchmesser und Formgebung der zumindest einen Öffnung, Bohrung oder Nut zur Aufnahme zumindest eines Schreibgeräts können an übliche Abmessungen von Schreibgeräts angepasst sein oder werden.

Weiter vorteilhaft kann zumindest ein Getränkeaufnahmeabschnitt vorgesehen sein zum Aufstellen zumindest einer Getränkedose oder Flasche, zumindest eines Bechers oder Glases etc. Insbesondere eignet sich der zumindest eine überhöhte Abschnitt zwischen den beiden Brillenbügelaufnahmeabschnitten als ein solcher Getränkeaufnahmeabschnitt. Der Getränkeaufnahmeabschnitt kann sich dabei in Längsrichtung und/oder in die Tiefe der Brillenablageeinrichtung hinein erstrecken. Die Brillenablageeinrichtung kann beispielsweise auf einem Schreibtisch positioniert werden, so dass dort nicht nur die Brille einer Person, sondern auch ein Becher, ein Glas, eine Getränkedose oder auch eine Getränkeflasche auf dem zumindest einen Getränkeaufnahmeabschnitt sicher angeordnet werden kann. Der zumindest eine Getränkeaufnahmeabschnitt kann beispielsweise in Form einer Nut in den überhöhten Abschnitt zwischen den beiden Brillenbügelaufnahmeabschnitten eingearbeitet sein, wobei in die Nut eine Getränkedose etc. eingesteckt und oder aufgelegt werden kann.

Ferner kann beispielsweise zumindest ein Aufnahmeabschnitt zur Aufnahme von Karten, insbesondere von Visitenkarten oder anderen flachen Gegenständen, vorgesehen sein. Somit kann die Brillenablageeinrichtung auch nach Art eines Visitenkartenständers Visitenkarten aufnehmen, die dort in senkrechter oder in einem Winkel zur Senkrechten positionierter Anordnung aufgestellt werden können.

Ferner kann die Brillenablageeinrichtung mit zumindest einem geschirmten Aufnahmeabschnitt versehen sein oder werden zur Aufnahme und zum Abschirmen und Verhindern eines Auslesens zumindest eines Schlüssels, von Karten oder anderen kabellos auslesbaren Gegenständen. Besonders vorteilhaft kann der zumindest eine geschirmte Aufnahmeabschnitt im Innern der Brillenablageeinrichtung angeordnet, insbesondere als Tasche oder Schublade ausgebildet sein. Durch Vorsehen zumindest eines solchen geschirmten Aufnahmeabschnitts ist es möglich, insbesondere im Innern der Brillenablageeinrichtung solche Gegenstände anzuordnen, bei denen die Gefahr besteht, dass diese von außen ausgelesen werden könnten, was beispielsweise bei Fahrzeugschlüsseln, Bank- bzw. EC-Karten und anderen Chipkarten der Fall ist. Ebenfalls ist es möglich, dort ein Mobiltelefon anzuordnen oder auch mehr als ein Mobiltelefon, wenn beispielsweise bei einer Besprechung verhindert werden soll, dass Dritte sich von außen Zugang zum Gespräch durch Abhören des Mobiltelefons und somit der Besprechung von außen verschaffen.

Weiter vorteilhaft können insbesondere im Bereich des zumindest einen überhöhten Abschnitts zwischen den beiden Brillenbügelaufnahmeabschnitten der Brillenablageeinrichtung noch weitere Aufnahmen zum Anordnen und insbesondere zum Halten oder zumindest sicheren Aufnehmen von Gegenständen vorgesehen werden.

Zur näheren Erläuterung der Erfindung werden im Folgenden Ausführungsbeispiele von dieser näher anhand der Zeichnungen beschrieben. Diese zeigen in:
- Figur 1: eine perspektivische Ansicht einer ersten Ausführungsform einer erfindungsgemäßen Brillenablageeinrichtung,
- Figur 2: eine Draufsicht auf eine zweite Ausführungsform einer erfindungsgemäßen Brillenablageeinrichtung,
- Figur 2a: eine Detailansicht der Brillenablageeinrichtung gemäß Figur 2 im Bereich von deren Nasenbügelaufnahme- und -abstützabschnitt,
- Figur 3: eine Seitenansicht der Brillenablageeinrichtung gemäß Figur 2,
- Figur 4: eine Querschnittsansicht der Brillenablageeinrichtung gemäß Figur 2 entlang der Linie A-A,
- Figur 5: eine weitere Querschnittsansicht der Brillenablageeinrichtung gemäß Figur 2 entlang der Linie B-B,
- Figur 6: eine Unteransicht der Brillenablageeinrichtung gemäß Figur 2,
- Figur 7: eine Draufsicht auf eine dritte Ausführungsform einer erfindungsgemäßen Brillenablageeinrichtung,
- Figur 8: eine erste perspektivische Draufsicht auf die Brillenablageeinrichtung gemäß Figur 7, und
- Figur 9: eine zweite perspektivische Draufsicht auf die Brillenablageeinrichtung gemäß Figur 7.

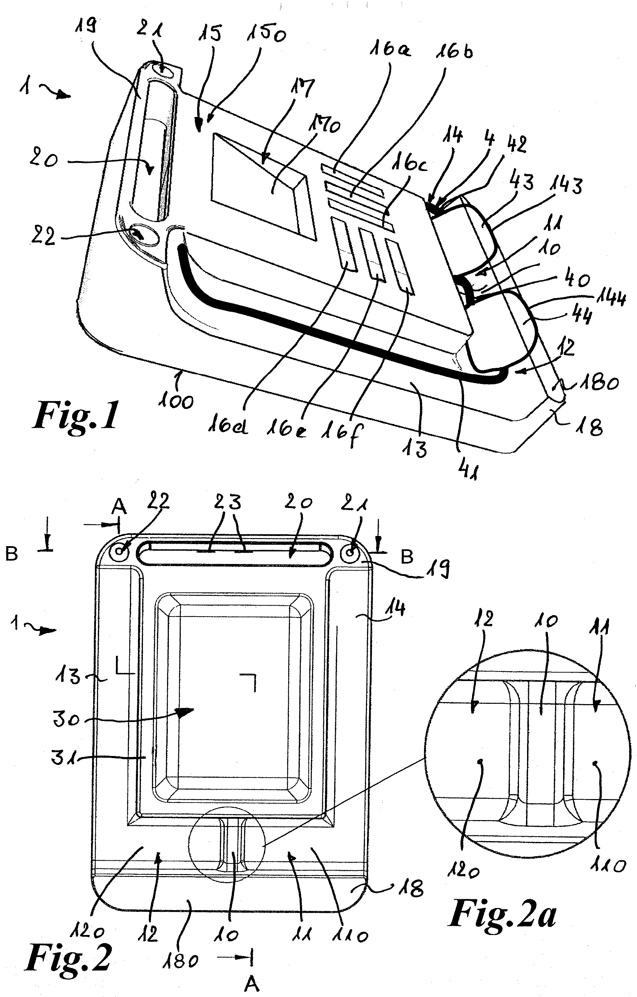

Figur 1 zeigt eine perspektivische Ansicht einer Brillenablageeinrichtung 1, die zum Aufnehmen einer Brille 4 und weiterer Gegenstände dient. Zu diesem Zweck weist die Brillenablageeinrichtung 1 einen Nasenbügelaufnahme- und -abstützabschnitt 10, beidseitig benachbart dazu zwei Brillengläseraufnahmeabschnitte 11, 12, zwei Brillenbügelaufnahmeabschnitte 13, 14, einen gegenüber den beiden Brillenbügelaufnahmeabschnitten 13, 14, den beiden Brillengläseraufnahmeabschnitten 11, 12 und dem Nasenbügelaufnahme- und -abstützabschnitt 10 erhöhten Abschnitt 15 auf, der von den anderen Abschnitten an drei Seiten umgrenzt wird. In dem podestartig ausgebildeten erhöhten Abschnitt 15 sind sechs schlitzförmige Öffnungen 16a bis 16f sowie eine in der Draufsicht viereckige Nut 17 angeordnet, die einen rampenartig ausgebildeten Nutboden 170 aufweist. Der rampenartige Nutboden 170 erstreckt sich somit in die Tiefe des überhöhten Abschnitts 15 bzw. der Brillenablageeinrichtung 1 hinein, ausgehend von der Außenseite 150 des überhöhten Abschnitts 15, mit einer schrägen Fläche, also in einem Winkel zur Horizontalen. In dieser Nut 17 können beispielsweise Karten, wie Visitenkarten, oder andere Gegenstände angeordnet werden.

Die Brillenablageeinrichtung 1 weist benachbart zu den beiden Brillengläseraufnahmeabschnitten 11, 12 bzw. dem Nasenbügelaufnahme- und -abstützabschnitt 10 einen rippenartigen Endabschnitt 18 und am gegenüberliegenden Ende der Brillenablageeinrichtung 1 einen zweiten Endabschnitt 19 auf, der sich an den überhöhten Abschnitt anschließt. In dem zweiten Endabschnitt 19 sind ein in Form einer Langnut ausgebildeter Abschnitt 20 zur Aufnahme eines Mobiltelefons und zwei in der Draufsicht kreisrunde Öffnungen 21, 22 zur Aufnahme eines jeweiligen Schreibgerätes, wie beispielsweise eines Stiftes, angeordnet. Der Abschnitt 20 zur Aufnahme eines Mobiltelefons kann, wie in Figur 2 gezeigt, mit einer Ladeeinrichtung 23 zum induktiven Laden des Mobiltelefons, das dort aufgestellt wird, versehen sein. In diesem Falle kann die Brillenablageeinrichtung 1 mit einer geeigneten Anschlusseinrichtung zum Anschließen beispielsweise eines Netzteils zum Verbinden mit einer Strom- bzw. Spannungsquelle versehen sein oder werden.

In die schlitzförmigen Öffnungen 16a bis 16f können weitere Gegenstände eingefügt oder eingestellt werden, wie beispielsweise ebenfalls Karten oder andere Flache Gegenstände, die auf der Brillenablageeinrichtung gelagert und eingehalten werden sollen.

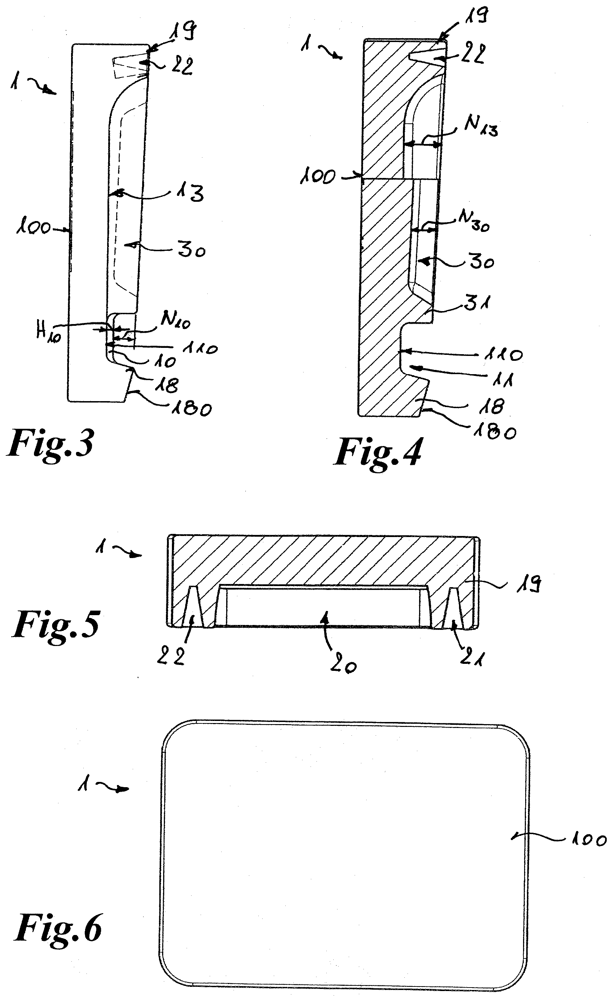

Die Unterseite 100 der Brillenablageeinrichtung 1 ist im Wesentlichen eben und flach ausgebildet, um als Aufstandsfläche zum Aufstellen der Brillenablageeinrichtung 1 auf einer Ebene, wie beispielsweise einem Tisch oder einem Schrank etc. zu dienen. In den Figuren 2 bis 6 ist eine weitere Ausführungsform der Brillenablageeinrichtung 1 gezeigt. Diese weist, wie Figur 6 entnommen werden kann, ebenfalls eine ebene und flache Unterseite 100 auf, die als Aufstandsfläche zum Aufstellen der Brillenablageeinrichtung 1 auf einer Ebene dient. Im Unterschied zu der Ausführungsform der Brillenablageeinrichtung 1 gemäß Figur 1 ist der überhöhte Abschnitt 15 lediglich mit einer in der Draufsicht rechteckigen Nut 30 mit einem diese allseitig umgrenzenden, vorkragenden Rahmen 31 versehen. Der Rahmen 31 bildet somit die Umrandung der Nut und zugleich den überhöhten Abschnitt 15. Wie der Querschnittsansicht der Brillenablageeinrichtung 1 in Figur 4 entnommen werden kann, ist die Nuttiefe N₃₀ der Nut 30 geringer als die Nuttiefe N₁₃ bzw. N₁₄ der beiden Brillenbügelaufnahmeabschnitte 13, 14, die benachbart zu dem Rahmen 31, der die Nut 30 umgibt, angeordnet sind. Grundsätzlich ist es jedoch auch möglich, dass die Nuttiefe der Nut 30 in dem überhöhten Abschnitt 15 zwischen den beiden Brillenbügelaufnahmeabschnitten 13, 14 dieselbe Nuttiefe wie diese aufweist, somit N₃₀ = N₁₃ = N₁₄.

Wie der Seitenansicht der Brillenablageeinrichtung 1 in Figur 3 ebenso wie der Detailansicht des Nasenbügelaufnahme- und -abstützabschnitts 10 in Figur 2a besonders gut entnommen werden kann, weist dieser gegenüber den beiden diesem benachbarten Brillengläseraufnahmeabschnitten 11, 12 eine Überhöhung, somit gegenüber dem rippenartigen Endabschnitt 18 und dem überhöhten Abschnitt 15 eine geringere Nuttiefe N₁₀ auf. Die Höhe H₁₀ des Nasenbügelaufnahme- und -abstützabschnitts 10 gegenüber dem Nutboden 110 des Brillengläseraufnahmeabschnitts 11 bzw. dem Nutboden 120 des Brillengläseraufnahmeabschnitts 12 kann beispielsweise 2 bis 5 Millimeter, insbesondere 4 Millimeter betragen. Diese Höhe H₁₀ ist ausreichend, um den Nasenbügel 40 einer Brille 4 dort abzustützen, während die dem Nasenbügel 40 benachbarten Brillengläser 43, 44 bzw. Umrandungen 143, 144 der Brillengläser 43, 44 auf den beiden Brillengläseraufnahmeabschnitten 11, 12 aufliegen. Ein seitlicher Halt für die beiden Brillenbügel 41, 42 der Brille 4, die auf den Brillenbügelaufnahmeabschnitten 13, 14 aufliegen (siehe Figur 1), wird durch den zwischen ihnen angeordneten überhöhten Abschnitt 15 geschaffen, was insbesondere Figur 1 entnommen werden kann.

Die beiden Brillenbügelaufnahmeabschnitte 13, 14 sind als außenseitig offene Nuten ausgebildet und weisen in Richtung des zweiten Endabschnitts 19 jeweils einen in der Seitenansicht in Figur 3 besonders gut erkennbaren großen Radius auf. Dieser dient insbesondere dazu, dort formschlüssig das Ende eines Brillenbügels 41 bzw. 42 aufzunehmen. Der Halt des Brillenbügels 41 bzw. 42 auf dem jeweiligen Brillenbügelaufnahmeabschnitt 13 bzw. 14 kann hierdurch noch weiter verbessert werden.

Wie den beiden Schnittansichten der Brillenablageeinrichtung 1 in den Figuren 4 und 5 besonders gut entnommen werden kann, sind die beiden Öffnungen 21, 22 zur Aufnahme von z.B. Schreibgeräten als nicht zylindrische, sondern vielmehr kegelförmige Bohrungen ausgebildet. Grundsätzlich ist es ebenfalls möglich, hier zylindrische Bohrungen mit rundem und/oder mehreckigem und/oder unregelmäßigem Querschnitt vorzusehen.

Wie den Figuren 3 und 4 besonders gut entnommen werden kann, weist der rippenartige Endabschnitt 18 auf seiner Oberseite 180 eine Fase auf. Es ist grundsätzlich jedoch ebenfalls möglich, die Oberseite 180 etwa parallel zu der Unterseite 100 der Brillenablageeinrichtung 1 verlaufen zu lassen.

Die Brillenablageeinrichtung 1 kann ferner beispielsweise mit einer Schublade versehen sein, die mit einem abschirmenden Material ausgekleidet oder versehen ist, um einen abgeschirmten Abschnitt zu schaffen, in den Schlüssel, Bankkarten bzw. Chipkarten und andere Gegenstände, deren Auslesen verhindert werden soll, angeordnet werden können. Ferner kann auch eine Tasche zur abschirmenden Aufnahme solcher Gegenstände vorgesehen und in die Brillenablageeinrichtung 1 in eine Nut oder Öffnung eingefügt, auf diese aufgelegt oder in diese in anderer Form integriert werden.

Die Brillenablageeinrichtung 1 kann beispielsweise aus nachwachsendem Rohstoff, wie Holz bzw. Hartholz, und/oder zumindest einem Kunststoffmaterial und/oder zumindest einem Metall bestehen. Insbesondere kann die Brillenablageeinrichtung als Spritzgussteil ausgebildet werden. Ferner sind beliebige Materialkombinationen möglich, insbesondere dann, wenn zumindest ein abgeschirmter Abschnitt vorgesehen wird, um Gegenstände darin sicher anordnen zu können.

Die Nut 30 ebenso wie die Nut 17 können auch nach Art eines Getränkehalters ausgebildet werden, somit eine entsprechende Formgebung aufweisen, um dort einen Getränkebecher, ein Glas, eine Flasche oder eine Dose sicher gegen Verrutschen und Umkippen aufstellen, einlegen und halten zu können. Es kann somit insbesondere in dem überhöhten Abschnitt 15 eine entsprechende Nut vorgesehen werden, die so angepasst und dimensioniert wird, dass darauf bestimmte Gegenstände im Wesentlichen formschlüssig oder formumgreifend aufgenommen und gehalten werden können. Der überhöhte Abschnitt 15 kann ferner ohne Nut, Bohrung, Öffnung etc. ausgebildet werden, also lediglich nach Art eines Podests mit ebener Ober- bzw. Außenseite 150.

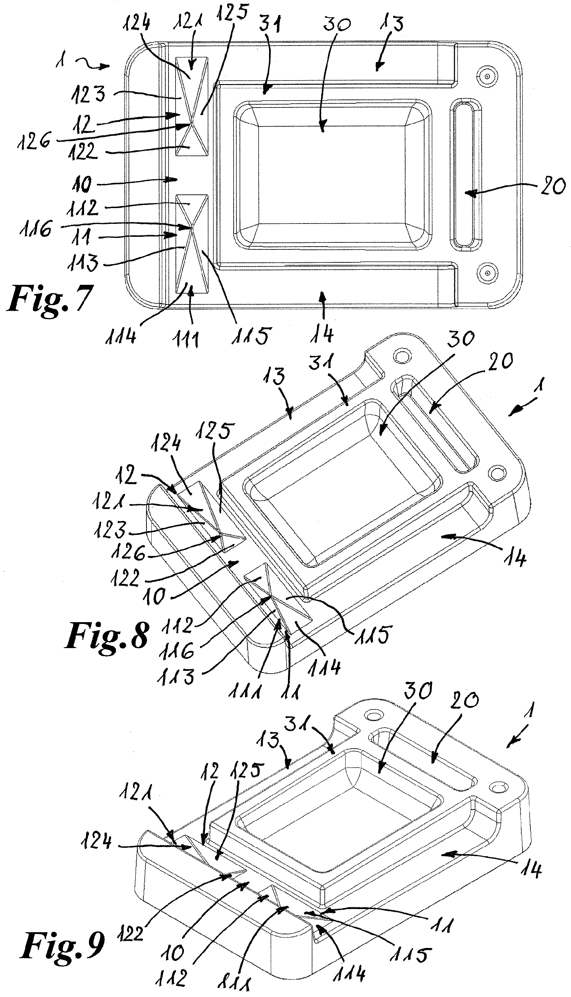

In den Figuren 7 bis 9 ist eine weitere Ausführungsform der Brillenablageeinrichtung 1 gezeigt. Gegenüber den vorstehend beschriebenen Ausführungsvarianten, die in den Figuren 1 bis 6 gezeigt sind, weist die Brillenablageeinrichtung 1 nach Figur 7 bis 9 Brillengläseraufnahmeabschnitte 11, 12 auf, die in dieser Ausführungsvariante als Mulden bzw. facettierte trichterförmige Mulden 111, 121 ausgebildet sind. Der zwischen den beiden facettierten trichterförmigen Mulden 111, 121 angeordnete Nasenbügelaufnahme- und -abstützabschnitt 10 liegt in derselben Ebene wie die beiden Brillenbügelaufnahmeabschnitte 13, 14 der Brillenablageeinrichtung 1. Im Unterschied zu den Ausführungsvarianten der Brillenablageeinrichtung 1 nach Figur 1 bzw. Figur 2 bis 6 ist somit der Nasenbügelaufnahme- und -abstützabschnitt 10 nicht gegenüber den beiden benachbarten Brillengläseraufnahmeabschnitten 11, 12 erhöht ausgebildet, sondern letztere gegenüber der Ebene, in der der Nasenbügelaufnahme- und -abstützabschnitt 10 und die Brillenbügelaufnahmeabschnitte 13, 14 positioniert sind, vertieft ausgebildet. Dies kann insbesondere Figur 9 sehr gut entnommen werden. Die jeweilige facettierte trichterförmige Mulde 111, 121 weist jeweils vier Facettenflächen auf, nämlich die facettierte trichterförmige Mulde 111 eine erste Facettenfläche 112, eine zweite Facettenfläche 113, eine dritte Facettenfläche 114 und eine vierte Facettenfläche 115, die alle nach Art eines Trichters in Richtung einer tiefsten Stelle 116 schräg zulaufend angeordnet bzw. ausgerichtet sind. Auch die facettierte trichterförmige Mulde 121 weist vier Facettenflächen auf, eine erste Facettenfläche 122, eine zweite Facettenfläche 123, eine dritte Facettenfläche 124 und eine vierte Facettenfläche 125, die ebenfalls aufgrund der Trichterform der Mulde 121 schräg zulaufend in Richtung einer tiefsten Stelle 126 in der Brillenablageeinrichtung 1 angeordnet sind. Die Facettenflächen 112, 113, 114, 115, 122, 123, 124, 125 sind entsprechend alle dreieckig geformt. Die jeweils ersten und dritten Facettenflächen 112, 114 bzw. 122, 124 sind unterschiedlich geformt und dimensioniert, so dass die jeweils tiefste Stelle 116 bzw. 126 der jeweiligen facettierten trichterförmigen Mulde 111, 121 nicht jeweils mittig in der facettierten trichterförmigen Mulde 111 bzw. 121 angeordnet ist, sondern näher am Nasenbügelaufnahme- und -abstützabschnitt 10. Grundsätzlich kann hier jedoch auch eine andere Ausbildung vorgesehen werden. Die in den Figuren 7 bis 9 gezeigte im Hinblick auf deren jeweilige tiefste Stelle 116 bzw. 126 asymmetrische Ausbildung der beiden facettierten trichterförmigen Mulden 111, 121 ermöglicht jedoch eine besonders gute Abstützung eines jeweiligen Brillenglases 43, 44 bzw. einer jeweiligen Brillenumrandung 143, 144 einer Brille 4 (siehe beispielhaft Figur 1), die auf der Brillenablageeinrichtung 1 abgelegt wird, da unterschiedlich dimensionierte Brillengläser 43, 44 bzw. Brillenumrandungen 143, 144 einer solchen Brille 4 durch die mit einem unterschiedlichen Neigungswinkel nach innen in die jeweilige Mulde 111, 121 auf deren jeweilige tiefste Stelle 116, 126 schräg zulaufenden ersten und dritten Facettenflächen 112, 114 bzw. 122, 124 optimal abgestützt werden können. Es kann auf jeder der ersten und dritten Facettenflächen 112, 114 bzw. 122, 124 jeweils eine linien- oder punktförmige Auflage der Brillengläser 43, 44 bzw. Brillenumrandungen 143, 144 erfolgen. Grundsätzlich können die Mulden 111, 121 anstelle einer facettierten Trichterform auch andere Formgebungen aufweisen. Beispielsweise können sie anstelle einer Trichterform auch die Form einer Nut aufweisen. In jedem Falle sollte ein guter Halt und eine gute und sichere Auflage der Brillengläser 43, 44 bzw. von diesen und deren Brillenumrandungen 143, 144 bzw. zumindest eines Brillenglases oder einer Brillenumrandung, falls die Brille nur eines/eine aufweist, ermöglicht werden.

Neben den im Vorstehenden beschriebenen und in den Figuren gezeigten Ausführungsformen von Brillenablageeinrichtungen zum Aufnehmen zumindest einer Brille mit zumindest einem Nasenbügel können noch zahlreiche weitere gebildet werden, insbesondere auch beliebige Kombinationen der vorstehend genannten Merkmale, wobei die Brillenablageeinrichtung zum Aufnehmen und Halten der Brille zumindest einen den Nasenbügel der Brille abstützenden Nasenbügelaufnahme- und -abstützabschnitt, zumindest zwei Brillengläseraufnahmeabschnitte und zumindest zwei Brillenbügelaufnahmeabschnitte zum Aufnehmen der Brillenbügel der Brille aufweist, wobei der zumindest eine Nasenbügelaufnahme- und -abstützabschnitt zwischen den zumindest zwei Brillengläseraufnahmeabschnitten angeordnet und diesen gegenüber mit einer größeren Höhe bzw. diesen gegenüber erhöht ausgebildet ist und/oder die zumindest zwei Brillengläseraufnahmeabschnitte gegenüber dem zumindest einen Nasenbügelaufnahme- und -abstützabschnitt vertieft ausgebildet sind.

### Bezugszeichenliste

- 1: Brillenablageeinrichtung
- 4: Brille
- 10: Nasenbügelaufnahme- und -abstützabschnitt
- 11: Brillengläseraufnahmeabschnitt
- 12: Brillengläseraufnahmeabschnitt
- 13: Brillenbügelaufnahmeabschnitt
- 14: Brillenbügelaufnahmeabschnitt
- 15: überhöhter Abschnitt
- 16a: schlitzförmige Öffnung
- 16b: schlitzförmige Öffnung
- 16c: schlitzförmige Öffnung
- 16d: schlitzförmige Öffnung
- 16e: schlitzförmige Öffnung
- 16f: schlitzförmige Öffnung
- 17: Nut
- 18: rippenartiger Endabschnitt
- 19: zweiter Endabschnitt
- 20: Abschnitt zur Aufnahme eines Mobiltelefons
- 21: Öffnung zur Aufnahme eines Schreibgeräts
- 22: Öffnung zur Aufnahme eines Schreibgeräts
- 23: Ladeeinrichtung
- 30: Nut
- 31: Rahmen
- 40: Nasenbügel
- 41: Brillenbügel
- 42: Brillenbügel
- 43: Brillenglas
- 44: Brillenglas
- 100: Unterseite von 1
- 110: Nutboden von 11
- 111: facettierte trichterförmige Mulde
- 112: erste Facettenfläche
- 113: zweite Facettenfläche
- 114: dritte Facettenfläche
- 115: vierte Facettenfläche
- 116: tiefste Stelle
- 120: Nutboden von 12
- 121: facettierte trichterförmige Mulde
- 122: erste Facettenfläche
- 123: zweite Facettenfläche
- 124: dritte Facettenfläche
- 125: vierte Facettenfläche
- 126: tiefste Stelle
- 143: Brillenumrandung von 43
- 144: Brillenumrandung von 44
- 150: Außenseite von 15
- 170: rampenartiger Nutboden
- 180: Oberseite von 18
- N₃₀: Nuttiefe von 30
- N₁₃: Nuttiefe von 13
- N₁₄: Nuttiefe von 14
- N₁₀: Nuttiefe von 10
- H₁₀: Höhe von 10

## Patentansprüche

1. Brillenablageeinrichtung (1) zum Aufnehmen zumindest einer Brille (4) mit zumindest einem Nasenbügel (40), wobei die Brillenablageeinrichtung (1) zumindest einen Aufnahmeabschnitt und zumindest eine Aufstandsfläche (100) zum Aufstellen der Brillenablageeinrichtung (1) aufweist,
**dadurch gekennzeichnet, dass**
die Brillenablageeinrichtung (1) zum Aufnehmen und Halten der Brille (4) zumindest einen den Nasenbügel (40) der Brille (4) abstützenden Nasenbügelaufnahme- und -abstützabschnitt (10), zumindest zwei Brillengläseraufnahmeabschnitte (11, 12) und zumindest zwei Brillenbügelaufnahmeabschnitte (13, 14) aufweist, wobei der zumindest eine Nasenbügelaufnahme- und -abstützabschnitt (10) zwischen den zumindest zwei Brillengläseraufnahmeabschnitten (11, 12) angeordnet und diesen gegenüber erhöht ausgebildet ist und/oder die zumindest zwei Brillengläseraufnahmeabschnitte (11, 12) gegenüber dem zumindest einen Nasenbügelaufnahme- und -abstützabschnitt (10) vertieft ausgebildet sind.

2. Brillenablageeinrichtung (1) nach Anspruch 1,
**dadurch gekennzeichnet, dass**
zwischen den beiden Brillenbügelaufnahmeabschnitten (13, 14) ein diesen gegenüber überhöhter Abschnitt (15) angeordnet ist.

3. Brillenablageeinrichtung (1) nach Anspruch 1 oder 2,
**dadurch gekennzeichnet, dass**
die Brillenablageeinrichtung (1) zumindest einen Abschnitt (20) zur Aufnahme zumindest eines Mobiltelefons aufweist.

4. Brillenablageeinrichtung (1) nach Anspruch 3,
**dadurch gekennzeichnet, dass**
der zumindest eine Abschnitt (20) zur Aufnahme zumindest eines Mobiltelefons mit zumindest einer Ladeeinrichtung (23) zum induktiven Laden eines Mobiltelefons versehbar oder versehen ist.

5. Brillenablageeinrichtung (1) nach einem der vorstehenden Ansprüche, **dadurch gekennzeichnet, dass**
zumindest eine Öffnung oder Bohrung (21, 22) zur Aufnahme zumindest eines Schreibgeräts vorgesehen ist.

6. Brillenablageeinrichtung (1) nach einem der vorstehenden Ansprüche, **dadurch gekennzeichnet, dass**
zumindest ein Getränkeaufnahmeabschnitt vorgesehen ist zum Aufstellen zumindest einer Getränkedose oder Flasche, zumindest eines Bechers oder Glases.

7. Brillenablageeinrichtung (1) nach einem der vorstehenden Ansprüche, **dadurch gekennzeichnet, dass**
zumindest ein Aufnahmeabschnitt (16a, 16b, 16c, 16d, 16e, 16f, 17) zur Aufnahme von Karten, insbesondere Visitenkarten, oder anderen flachen Gegenständen vorgesehen ist.

8. Brillenablageeinrichtung (1) nach einem der vorstehenden Ansprüche, **dadurch gekennzeichnet, dass**
zumindest ein geschirmter Aufnahmeabschnitt vorgesehen ist zur Aufnahme und zum Abschirmen und Verhindern eines Auslesens eines Schlüssels, von Karten oder anderer kabellos auslesbarer Gegenstände.

9. Brillenablageeinrichtung (1) nach Anspruch 8,
**dadurch gekennzeichnet, dass**
der zumindest eine geschirmte Aufnahmeabschnitt im Innern der Brillenablageeinrichtung (1) angeordnet, insbesondere als Tasche oder Schublade ausgebildet ist.

10. Brillenablageeinrichtung (1) nach einem der vorstehenden Ansprüche, **dadurch gekennzeichnet, dass**
die zumindest zwei Brillengläseraufnahmeabschnitte (11, 12) muldenartig und/oder trichterförmig und/oder nutartig ausgebildet sind, insbesondere als facettierte Mulde, insbesondere facettierte trichterförmige Mulde (111, 121), zum geführten Abstützen eines jeweiligen Brillenglases (43, 44) und/oder einer Brillenumrandung (143, 144).
